Europäisches Patentamt

European Patent Office

Office européen des brevets

(11) Publication number: **0 293 786**
**A2**

# (12) EUROPEAN PATENT APPLICATION

(21) Application number: 88108531.0

(51) Int. Cl.⁴: **B64D 11/04**

(22) Date of filing: 27.05.88

(30) Priority: 04.06.87 US 58076

(43) Date of publication of application:
07.12.88 Bulletin 88/49

(84) Designated Contracting States:
DE ES FR GB IT

(71) Applicant: NORTON COMPANY
1 New Bond Street
Worcester, MA 01606-2698(US)

(72) Inventor: Bird, John P.
Bentley Road
Barre 01005 Massachusetts(US)
Inventor: Lindberg Jeffrey C.
19 Redwood Drive
Princeton 01541 Massachusetts(US)
Inventor: Sears, Richard T.
159 Mendon Road
Northbridge 01534 Massachusetts(US)

(74) Representative: Baillie, Iain Cameron et al
c/o Ladas & Parry Isartorplatz 5
D-8000 München 2(DE)

(54) Composite armored seat.

(57) A composite armored seat made up of a hard facing-layer, such as siliconized silicon carbide, adhesively affixed to a relatively resilient support-layer and wherein the hard facing-layer is made up of not more than 6 monolithic pieces the configuration of which includes multiple surfaces and compound curves.

FIG. 1

The invention relates to hard ceramic faced armor where the ceramic facing is laminated to a more resilient support layer. The armor is highly resistant to armor piercing bullets.

Nowhere was the value of ceramic armored seats more evident than in Vietnam during the conflict there, where numerous lives were saved through the use of such seats in helicopters. Since that experience essentially all combat ready helicopters are fitted with bullet proof seats, the majority of which are ceramic faced armored seats.

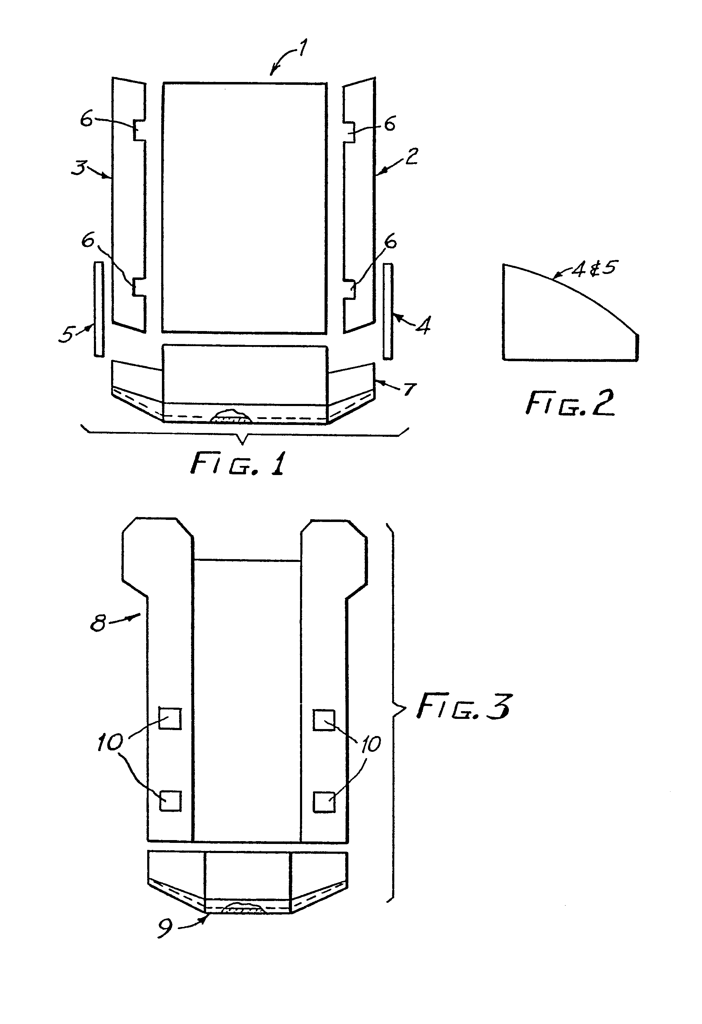

Typical of the type of armored seat currently in use is that shown and described in U.S. Patent No. 3,581,620 to E. W. Hauck et al. The seat is a laminar structure made up of a backing or inner seat-shaped relatively resilient support layer (25, Figs. 1-4) which consists of resin bonded fibers or cloth, usually one piece in the shape of a bucket seat, to which are adhesively attached ceramic tiles to form a complete layer (27, Figs. 1-4). The ceramic layer, usually boron carbide, is made of 18 or 20 or more tiles which are fitted together on the resin-cloth seat configuration. As can be seen from the drawing in the reference, the ceramic tiles make up the outside surface of the armored seat, the surface which will be struck by a bullet or bullets if small arms fire is directed at for example, a helicopter equipped with such a seat. Each different plane or surface of the outer layer, i.e. the ceramic face (27 Figs. 1-4) represents one or more ceramic tiles adhered to the composite resin bucket seat. For example looking at Fig. 2, the changes in direction of the surface of the bottom of the bottom bucket section of the seat represent 3 or more ceramic tiles. Likewise looking at that same portion of the seat in Figs. 1 and 3 shows at least 6 more tiles forming the upwardly inclined rear part of the bottom bucket section. The back support element of the seat is also made up of a multiplicity of tiles for each change in direction of the surface of the back support section. Finally, side panels 35 in Figs. 1-3 make up an armored seat with optimum protection from small arms fire. Normally the finished seat includes a so-called spall shield which is nothing more than a heavy fabric covering on the outer surfaces of the bucket seat. The cloth covering retains pieces or fragments of the ceramic tile that might break off and fly around if the tile should be hit by a projectile.

A more detailed description of the make-up and characteristics of the tile for a ceramic faced armor is set out in U.S. Patent No. 3,509,833 to R. L. Cook. The reference describes a hard faced ceramic armor (see Fig. 1) made up of an aluminum oxide tile (8) adhered with a flexible adhesive (4), like polysulfide, to a resin-fiberglass laminated backing (2). This alumina faced armor plate has a four to one advantage over steel i.e. for equal stopping capability the ceramic faced armor would weigh only one quarter of the weight of steel armor. While this may be less important if the armor is to be used in or on land vehicles, it is extremely important if the armor is to be used in aircraft. The reference shows the mechanism by which the ceramic armor defeats a ballistic projectile including an armor piercing bullet. Referring to Figs. 2 and 4 of the Cook patent, a projectile 7 is shown impacting on the hard faced ceramic side of the armor plate or tile. Fig. 2 is the instant of impact. The projectile 7 is depicted as partially fragmented or shattered and the ceramic has commenced to fracture in an expanding conical shape 6 from the point of impact. The conical expansion 6 of the impact area greatly distributes the energy of impact which is then transferred to the fiber-resin backing. With the residual force of the impact being distributed over such an increased area, the backing is well capable of preventing further travel of the bullet and the cone of ceramic.

In an advertisement by Carborundum Co. which appeared in a 1969 issue of SAFE magazine, there is shown a laminated fiber glass-ceramic faced armored seat wherein the ceramic facing layer can be alumina, boron carbide, or silicon impregnated silicon carbide. The seat shown, however, is made up of more than six pieces and it does not utilize a one piece bottom bucket section.

J.V.E. Hansen, "How Boron Carbide Armor Was Developed", Research/Development, pp. 26-31, June 1968, details the development of ceramic faced armor during the sixties. It is most relevant for its discussion of the evolution of the process for making large high density boron carbide tiles i.e. of the order of 17" x 17" which may incorporate compound curves. The impetus for this effort to develop a method of making boron carbide tiles larger than 6 to 9 inches square, was the fact that the larger the tile the less costly to make and more importantly, the larger the tiles the fewer the joints a given armored article would have thus reducing the number of points of weakness. Contrary to what the earlier Cook reference states, it was found that the point where two or more tiles met was a point of weakness from a ballistics point of view which could only be minimized by making the edges of each tile substantially thicker than the rest of the tile or by using metal shims as is known in the art; this had the undesirable effect of adding significant weight to the armor. By 1968 industry was able to produce tiles 17" x 17" with so-called compound curves as shown in Figs. 4 and 5 of the Hansen reference. However, these tiles were intended for body armor which, relative to an armored helicopter seat, is a simple shape. As pointed out above, each change in direction of the surface of an armored seat represents at least one tile so that a complete seat involves 18 or 20 or more tiles with the inherent weakness at the joint where two or more tiles meet. As one skilled in the art will readily appreciate, the ability to make a hot-pressed boron carbide tile 17" x 17" offers very little advantage in the construction of a product as complex as that of the seat of the Hauck et al patent except perhaps for the very bottom panel of the bottom bucket section and the flat back plate of the back support section. All of the rest of the seat i.e. the numerous different planes, must be formed by first pressing a straight square or rectangular tile which must then be cut and machined with diamond tools, a very extensive and expensive process. It would also be very apparent to one skilled in the art that a unitary joint-free hot-pressed boron carbide shape making up a complete seat configuration (to be later affixed to the resin-fiberglass backing) would be impossible. In fact, the fabrication of even the bottom bucket section in one piece would be impossible via the processing used to manufacture ceramic armored seats heretofore.

The present invention eliminates all or a large part of the weak spots and expensive machining normally associated with prior art ceramic armored seats.

## DISCLOSURE OF THE INVENTION

In its most preferred embodiment, the invention is a ceramic faced resin-cloth laminate backed armored seat in which the ceramic facing is monolithic, i.e. all one piece as compared to being made up of a large number of ceramic or refractory tiles adhered to the back side of the resin-cloth laminate. The ceramic facing is sintered silicon carbide impregnated with 5 to 30% by weight of elemental silicon so that the impregnated shape is fully dense thus providing optimum ballistic protection. The backing is adhered to the one piece seat shaped ceramic facing with a layer of polysulfide adhesive. The backing is a laminate of various numbers of sheets of cloth made from an aromatic polyamide fiber and about 20-24% by weight of an unsaturated polyester resin. The backing is prefabricated in the shape of a seat that will mate on its outside surfaces with the inside surfaces of the ceramic facing; while this is preferred, the backing may be laid up directly onto the inside surfaces of the ceramic facing (i.e. the ceramic facing functions as a mold).

While cloth woven from aromatic polyamide yarn is preferred because it is the most effective, other materials may be substituted such as glass cloth which has been widely used, or other types of cloth like nylon. Similarly, this reinforcing medium may be woven or nonwoven. A suitable substitute for the silicon impregnated silicon carbide facing are high density boron carbide, aluminum oxide, and titanium diboride. However it should be noted that aluminum oxide is heavier than the silicon-silicon carbide embodiment, and boron carbide and titanium diboride must be hot isostatically pressed to produce the high density ceramic body necessary for the required ballistic protection. The backing and facing can be almost any thickness desired but a resin-cloth backing with a thickness of from 0.22 to 0.42 of an inch and a ceramic face thickness of from 0.25 to 0.60 of an inch would provide adequate protection from currently available small arms ammunition.

As briefly pointed out above, a very major contribution made to the art by the present invention is the elimination of the numerous joints where the ceramic tiles meet in the prior art armored seats. With the monolithic or near monolithic seat of the invention, the number of joints is zero or only 7 in the case where the seat is made up of 6 pieces. In addition the seat of the present invention can be made smoothly contoured rather than with all the sharp angles of the prior art as is evident in Figs. 1-3 of the Hauck et al patent.

## BRIEF DESCRIPTION OF THE DRAWING

Figure 1 is an exploded rear view of a 6 piece ceramic facing layer.

Figure 2 is a side view of panels 4 and 5 of Figure 1.

Figure 3 is an exploded rear view of a 2 piece ceramic facing layer.

## EXAMPLES OF THE PREFERRED EMBODIMENTS

## EXAMPLE I

In its most preferred form, the invention is a ceramic faced armored seat where the ceramic facing is silicon impregnated sintered silicon carbide that is one piece with no seams or interruptions throughout the entire seat shaped piece of ceramic. The seat is fabricated in the following manner:

A casting slip is prepared from the following combination of materials:

0.1 - 8 micron silicon carbide      117 lbs. (53.1 kg.)

30 - 170 micron silicon carbide      108 lbs. (5.3 kg.)

"N" Brand sodium silicate (Philadelphia Quartz Co.) 78 cc.

     tap water    3.4 gal. (13.1 liters)

The mixture is milled for about 16 hours. A portion of the slip is poured into a plaster-of-Paris mold which defines a cavity that is the shape of an entire seat having bottom bucket section and a back support section that is 0.35 in. (0.89 cm) thick. When the casting is sufficiently dry the green silicon carbide seat shape is removed from the mold. The casting is then exposed to elemental silicon at a temperature of 2150°C in a nitrogen atmosphere for about 5 minutes. This causes the silicon carbide to sinter and become fully impregnated with silicon. A 24 ply aromatic polyamide cloth and unsaturated polyester resin laminate is laid up in the conventional manner on a form that corresponds in shape and dimensions to the inner surface of the silicon impregnated silicon carbide seat shaped facing-layer. The lay-up is cured and trimmed. A polysulfide adhesive is coated on the outside or back surface of the silicon-silicon carbide seat shape and then mated with the cloth-resin laminate seat shape. The polysulfide adhesive is cured and the support structure and remaining fixtures are attached to the seat after a spall shield cover is cemented to the seat.

## EXAMPLE II

A six piece ceramic facing layer is made with each piece being fabricated in the same manner as the complete one piece ceramic seat shaped facing layer of Example 1. The six pieces or tiles are shown in Figs. 1 and 2. In Fig. 1, the broad portion of the back support section is designated as 1 with two wing like tiles 2 and 3 which abut the broad tile 1 when assembled on the resin-cloth laminate seat shaped support layer. Tiles 4 and 5 are roughly triangular shaped pieces that provide side lower torso protection to the occupant of the seat and abut tiles 2 and 3 as well as the one piece bottom bucket section 7 when assembled. The slots or openings 6 in tiles 2 and 3 are to accommodate mounting plates for the seat's support structure. The seat shaped resin-cloth laminate support layer is fabricated in the conventional manner as pointed out in Example I, and the tiles 1 through 6 and the one piece bottom bucket section 7 are adhered to the resin-cloth configuration with polysulfide adhesive.

## EXAMPLE III

Fig. 3 is a different style of ceramic armored seat where the ceramic facing layer is made up of two monolithic pieces, a back support section 8 and a bottom bucket section 9. The square holes 10 in the side wings of the back support section 8 are for mounting plates for the seats support structure. The silicon impregnated silicon carbide back support section 8 and bottom bucket section 9 are cast and impregnated with silicon as described in Example I. The resin-cloth laminate support layer or backing is also formed by methods well known in the art as pointed out in Example I. The resin-cloth seat shaped laminate is coated on the outside with polysulfide adhesive and the two ceramic sections 8 and 9 are contacted with the resin cloth laminate on the polysulfide outside surface and clamped together until the polysulfide is cured.

While the foregoing examples show the manufacture of two basic seat configurations, the invention is not to be construed as limited to those two. Likewise additional protective panels may be added to the basic seat such as 35 in Figs. 1-3 of the Hauck et al reference, which could of course increase the total number of monolithic pieces of ceramic to more than six.

## Claims

1. A composite armored seat comprising a relatively resilient support-layer adhesively affixed to a hard ceramic facing-layer characterized by a ceramic facing-layer made up of a maximum of 6 monolithic pieces of ceramic with at least some of said monolithic pieces made up of multiplane surfaces and compound curves.

2. A composite armored seat according to claim 1, wherein said ceramic facing-layer is made up of two pieces, a bottom bucket section and a back support section.

3. The composite armored seat of claim 1, wherein said ceramic facing-layer is a unitary, one piece bottom bucket section and back support section.

4. A composite armored seat according to any one of the preceding claims, wherein the hard ceramic of the facing-layer is of silicon-impregnated silicon carbide, silicon carbide, boron carbide, aluminum oxide, or titanium diboride.

5. A composite armored seat according to any one of the preceding claims, wherein said relatively resilient support-layer is a glass cloth-resin laminate, synthetic fiber cloth-resin laminate, non-woven glass fiber-resin composite, non-woven synthetic fiber-resin composite, and aluminum metal.

6. A composite armored seat comprised of a relatively resilient support layer adhesively affixed to a hard ceramic layer characterized by a one piece bottom bucket section made up of multiplane surfaces and compound curves, and a back support section.

FIG. 1

FIG. 2

FIG. 3